# EUROPEAN PATENT APPLICATION

(11) **EP 2 479 961 A1**
(43) Date of publication of application: **25.07.2012**
(21) Application number: 12151838.5
(22) Date of filing: 19.01.2012
(51) Int. Cl.: H04M 1/60

(54) **Apparatus and method for switching multi-channel audio in a portable terminal**

(30) Priority: 20.01.2011 CN 201110026839; 09.01.2012 KR 20120002570
(71) Applicant: Samsung Electronics Co., Ltd., Suwon-si, Gyeonggi-do 442-742 (KR)
(72) Inventor: SUGANG, Tian, 442-742 Gyeonggi-dol (KR); FEI, Yu, 442-742 Gyeonggi-do (KR); QIANFEN, Jiao, 442-742 Gyeonggi-do (KR)
(74) Representative: Harrison Goddard Foote

(57) **Abstract**

A multi-channel audio switching method and device for terminal sets correspondence between output audio types and audio output modules, and sets output levels for the different audio output modules. When the portable terminal receives an instruction to output an audio, the instruction carries an output audio type. The portable terminal determines an audio output module corresponding to the output audio type and an output level according to the correspondence, and determines, which audio output module has an output level not higher than the determined output level, and whether there are idle audio output modules among the found out audio output modules; if yes, the portable terminal outputs the audio through the currently highest level idle audio output module among the found out audio output modules; if not, the portable terminal determines and instructs one audio output module to output the audio according to the determined output level.

## Description

### TECHNICAL FIELD OF THE INVENTION

The present invention relates to audio processing technologies for terminals, and more particularly, to a multi-channel audio switching method and apparatus for a portable terminal.

### BACKGROUND OF THE INVENTION

With the development of communication technology, terminals, such as mobile phones, personal digital assistant (PDA), have more functions and are more powerful. Audio processing functions of terminals are also gradually increased. The portable terminals can not only output phone calls, but also output broadcasts and songs. However, the portable terminal can only output one audio at the same time. For example, when a phone call is being outputted, the outputting broadcast or song must be paused, even if the portable terminal includes multi-channel audio output modules, for example, the portable terminal may simultaneously have an earphone and a loudspeaker at the same time.

Currently, most of the portable terminals include multi-channel audio output modules, and can simultaneously output multi-channel audios. Further, software of most of the portable terminals can also complete multitasks, that is, the software can control the multi-channel audio output modules to simultaneously output different multi-channel audios. However, how to freely control switching between different audio output modules when the multi-channel audio output modules simultaneously output different multi-channel audios, is an urgent problem to be solved.

### SUMMARY OF THE INVENTION

To address the above-discussed deficiencies of the prior art, it is a primary object to provide a multi-channel audio switching method for terminal, which can control switching between different audio output modules during multi-channel audios being outputted.

The present disclosure also provides a multi-channel audio switching device for terminal, which can control switching between different audio output modules during multi-channel audios being outputted.

In order to achieve the above purposes, the technical solutions implemented by the present disclosure can be specifically completed in following manner:

a multi-channel audio switching method for terminal includes setting correspondence between output audio types and audio output modules and setting output levels for the different audio output modules; the method further includes:

the portable terminal receives an instruction of outputting an audio, the instruction carrying an output audio type;

the portable terminal determines an audio output module corresponding to the output audio type and an output level of the corresponding audio output module according to the set correspondence;

the portable terminal determines, in order audio output modules, which of each has an output level not higher than the determined output level according to the determined output level, and determines whether there are idle audio output modules among the found out audio output modules; if yes, the portable terminal outputs the audio through the currently highest level idle audio output module among the found out idle audio output modules; if not, the portable terminal determines one audio output module according to the determined output level and instructs the audio output module to output the audio.

the portable terminal includes a multi-channel audio switching device which includes a logic operation module, an instruction control module, a memory module and a plurality of audio output modules, among which:

the logic operation module is used to identify the user's operation on the portable terminal and to generate an instruction of outputting an audio, the instruction carrying an output audio type sent to the instruction control module;

the instruction control module is used to receive the instruction of outputting an audio sent by the logic operation module, and to determine an audio output module corresponding to the output audio type carried by the instruction and an output level of the corresponding audio output module according to the correspondence obtained from the memory module, and to find out in order audio output modules of which each has an output level not higher than the determined output level, and to find out the currently highest level idle audio output module among the found out audio output modules and then to instruct the idle audio output module to output the audio; if no idle audio output module is found according to the determined output level, to determine an audio output module corresponding to the determined output level according to the output levels of the different audio output modules obtained from the memory module and to instruct the audio output module to output the audio;

the memory module is used to store the correspondence between the output audio types and the audio output modules and to store output levels set for the different audio output modules;

one of the plurality of audio output modules is used to output the audio according to the instruction of the instruction control module.

Before undertaking the DETAILED DESCRIPTION OF THE INVENTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:

FIGURE 1 illustrates a schematic diagram of a multi-channel audio switching process conversion for terminal provided by the present disclosure;

FIGURE 2 illustrates a flowchart of a multi-channel audio switching method for terminal provided by the present disclosure;

FIGURE 3 illustrates a structure schematic of a multi-channel audio switching device for terminal provided by the present disclosure;

FIGURE 4 illustrates a flowchart of a first embodiment of the multi-channel audio switching method for terminal provided by the present disclosure;

FIGURE 5 illustrates a flowchart of a second embodiment of the multi-channel audio switching method for terminal provided by the present disclosure;

FIGURES 6a and 6b illustrate a flowchart of a third embodiment of the multi-channel audio switching method for terminal provided by the present disclosure;

FIGURE 7 illustrates a flowchart of a forth embodiment of the multi-channel audio switching method for terminal provided by the present disclosure;

FIGURES 8a and 8b illustrate a flowchart of a fifth embodiment of the multi-channel audio switching method for terminal provided by the present disclosure;

FIGURES 9a and 9b illustrate a flowchart of a sixth embodiment of the multi-channel audio switching method for terminal provided by the present disclosure; and

FIGURE 10 illustrates an appearance schematic of a terminal provided by the present disclosure.

### DETAILED DESCRIPTION OF THE INVENTION

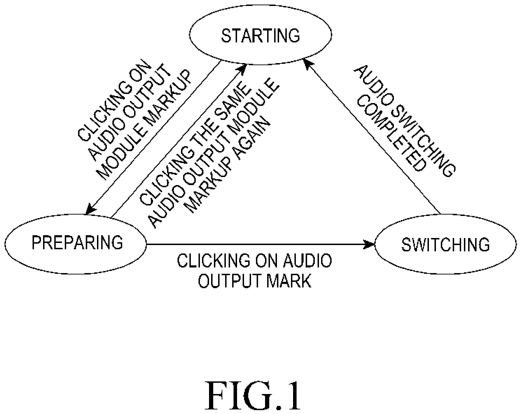

FIGURES 1 through 10, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged electronic device. In order to make objects, technical solutions and advantages of the invention clear, the present invention is hereinafter further explained in details with reference to embodiments and drawings.

A portable terminal according to an embodiment of the present disclosure is configured to communicate with a server through an IP (Internet Protocol) network. The portable terminal can be embodied as any of multiple types of information communication devices and multimedia devices such as a digital broadcasting terminal, a Personal Digital Assistant (PDA), a smart phone, a 3G terminal, for example, an IMT-2000 (International Mobile Telecommunication 2000) terminal, a WCDMA (Wideband Code Division Multiple Access) terminal, a GSM/GPRS (Global System for Mobile Communication Packet Radio Service), a UMTS (Universal Mobile Telecommunication Service) terminal, an LTE terminal, etc.

In order to control switching between different audio output modules during multi-channel audios being outputted in a terminal, the present disclosure sets correspondence between output audio types and audio output modules, and sets output levels for the different audio output modules. When an instruction of outputting an audio is received, the portable terminal determines an audio output module corresponding to the output audio type and an output level of the corresponding audio output module according to the correspondence, and determines, according to the determined output level in order audio output modules, which of each has an output level not higher than the determined output level, and then determines the currently highest level idle audio output module among the found out audio output modules to output the audio; if no idle audio output module is found according to the determined output level, the portable terminal determines an audio output module to output the audio according to the determined output level and instructs the audio output module to output the audio; when the audio is being outputted, the audio output module may pause or not pause other audio which is being outputted.

In the disclosure, the portable terminal has a plurality of audio output modules, which can be earphones or loudspeakers. The earphones can be multi-channel headphones, for example, one ordinary headphone with one Bluetooth® headset, two ordinary headphones, or two ordinary headphones with one Bluetooth headset, and the like.

In the disclosure, three states can be set to control switching the audio output modules outputting audios. The three states include starting state, preparing state and switching state. An audio switch interface can be set in the portable terminal. When a user opens the audio switch interface, the portable terminal will receive an instruction of starting audio switch and enter into the starting state. In this state, the portable terminal can initialize the audio output modules, and prompts the currently provided audio output module markups and provided output audio markups to the user. If the user operates one provided audio output module markup, the portable terminal will receive an instruction of preparing audio switching and enter into the preparing state to carry out preparation before switching. If the user operates the same audio output module markup again, it means to return to the starting state, and the portable terminal will return to the starting state after receiving the instruction of returning to the starting state. If the user clicks on a switch output audio mark, the portable terminal will receive an instruction of switching output audios, and switch the output audios. When switching the output audios is completed, the portable terminal will return to the starting state. The whole process is shown in FIGURE 1.

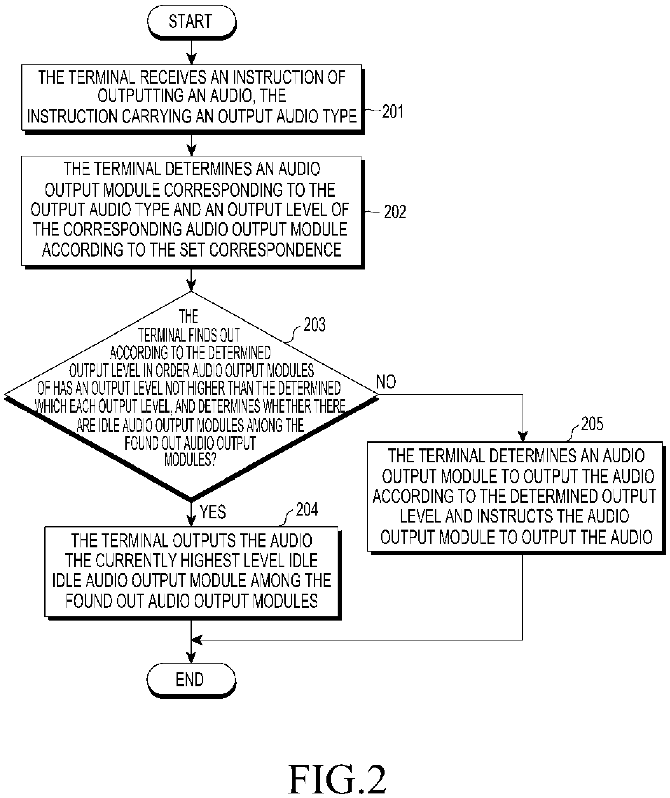

FIGURE 2 is a flowchart of a multi-channel audio switching method for terminal provided by the present disclosure; the method includes setting correspondence between output audio types and audio output modules and setting output levels for the different audio output modules in the portable terminal. The method further includes:

Block 201: the portable terminal receives an instruction of outputting an audio, the instruction carrying an output audio type;

Block 202: the portable terminal determines an audio output module corresponding to the output audio type and an output level of the corresponding audio output module according to the set correspondence;

Block 203: the portable terminal determines, according to the determined output level in order audio output modules, which of each has an output level not higher than the determined output level, and determines whether there are idle audio output modules among the found out audio output modules; if yes, block 204 is performed; if not, block 205 is performed;

Block 204: the portable terminal outputs the audio through the currently highest level idle audio output module among the found out audio output modules;

Block 205: the portable terminal determines an audio output module to output the audio according to the determined output level and instructs the audio output module to output the audio;

In this block, because the audio output module is currently outputting other audio, a process of dealing with the other audio which is being outputted includes: if the audio output module is an earphone, the audio output module pause outputting the other audio; if the audio output module is a loudspeaker, the audio output module will not pause outputting the other audio which is being outputted and simultaneously outputs the other audio and the audio which is instructed to be output by Block 201.

In the present disclosure, the set correspondence between the output audio types and the audio output modules can be set in the portable terminal in the form of a list, as shown in table 1:

**Table 1**

| Output audio type | Audio output module type |
|---|---|
| Incoming call | Earphone 1 |
| Short message | Earphone 2 |
| Alarm | Earphone 1 |
| Music | Earphone 2 |
| Broadcasting | Loudspeaker |
| ... | .... |

The user can change the correspondence by changing the contents of the table 1.

In the disclosure, the set output levels for the different audio output modules can be set in the portable terminal in the form of a list, as shown in table 2:

**Table 2**

| Audio output module type | Output level |
|---|---|
| Earphone 1 | 1 |
| Earphone 2 | 2 |
| Bluetooth Headset | 3 |
| Loudspeaker | 4 |

It can be seen from the table 2, if there are two or more earphones inserted into the portable terminal, the output level of the earphone 1 is defaulted as the highest output level, and this setting can be changed; the output level of the loudspeaker is the lowest output level, and can be set in the table or default not set.

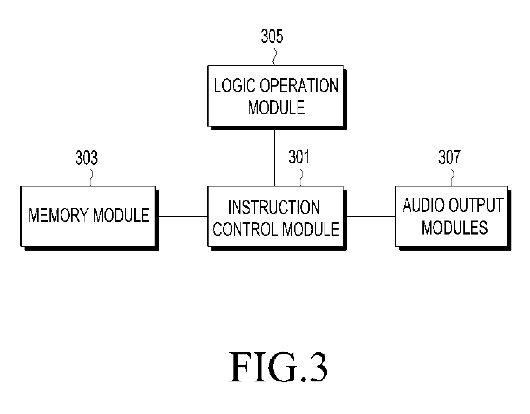

FIGURE 3 illustrates a structure schematic of a multi-channel audio switching device for terminal provided by the present disclosure. The multi-channel audio switching device for terminal includes: a logic operation module, an instruction control module, a memory module and a plurality of audio output modules, among which:

the logic operation module is used to identify the user's operation on the portable terminal and then generate an instruction of outputting an audio sent to the instruction control module, the instruction carrying an output audio type;

the instruction control module is used to receive the instruction of outputting an audio sent by the logic operation module, and to determine an audio output module corresponding to the output audio type carried by the instruction and an output level of the corresponding audio output module according to the correspondence obtained from the memory module, and to find out according to the determined output level in order audio output modules of which each has an output level not higher than the determined output level, and to find out the currently highest level idle audio output module among the found out audio output modules and then to instruct the idle audio output module to output the audio; if no idle audio output module is found according to the determined output level, to determine an audio output module corresponding to the determined output level according to the output levels of the different audio output modules obtained from the memory module and to instruct audio output module to output the audio;

the memory module is used to store the correspondence between the output audio types and the audio output modules and to store the output levels set for the different audio output modules; and

one of the plurality of audio output modules is used to output the audio according to the instruction of the instruction control module, when the audio is being outputted, the audio output module may pause or not pause outputting other audio.

When the portable terminal outputs audio, if there is only one audio outputted at the same time, the audio output module with the highest output level can be directly selected to output the audio, without the need to use the method and device provided by the present disclosure. As long as there are two or more audios which are needed to be outputted at the same time, the method and device provided by the present disclosure can be used.

After the portable terminal opens the audio output switching function, switching different audios between the different audio output modules can be achieved. During the switching process, output audios outputted by audio output modules corresponding to higher output levels can occupy audio output modules corresponding to lower output levels so as to output audios, that is to make currently outputting audio outputted by the audio output modules corresponding to lower output levels pause, or to make currently outputting audio outputted by the audio output modules corresponding to lower output levels and the currently outputting audio outputted by the audio output modules corresponding to higher output levels be simultaneously outputted; In the specific implementation, it can be divided into the following situations.

First situation, when the audio output modules are one headphone with one loudspeaker, that is audio output switching between the headphone and the loudspeaker, the headphone can be one ordinary headphone or Bluetooth headset. When there is an audio needed to be outputted, the headphone can be selected to output the audio; when there is another audio needed to be outputted, the loudspeaker can be selected to output the another audio. When the headphone and the loudspeaker are currently outputting audios, if there is one more audio needed to be outputted, then it is need to determine an audio output module corresponding to the audio type and decide an output level of the corresponding audio output module. If the decided output level is higher than the output levels of both of the headphone and the loudspeaker, the headphone is selected to output the one more audio and the headphone pauses the audio which is currently being outputted. If the decided output level is higher than the output level of the loudspeaker but lower than the output level of the headphone, the loudspeaker is selected to output the one more audio, and the loudspeaker continues to output the audio which is currently being outputted, that is to output two audio at the same time.

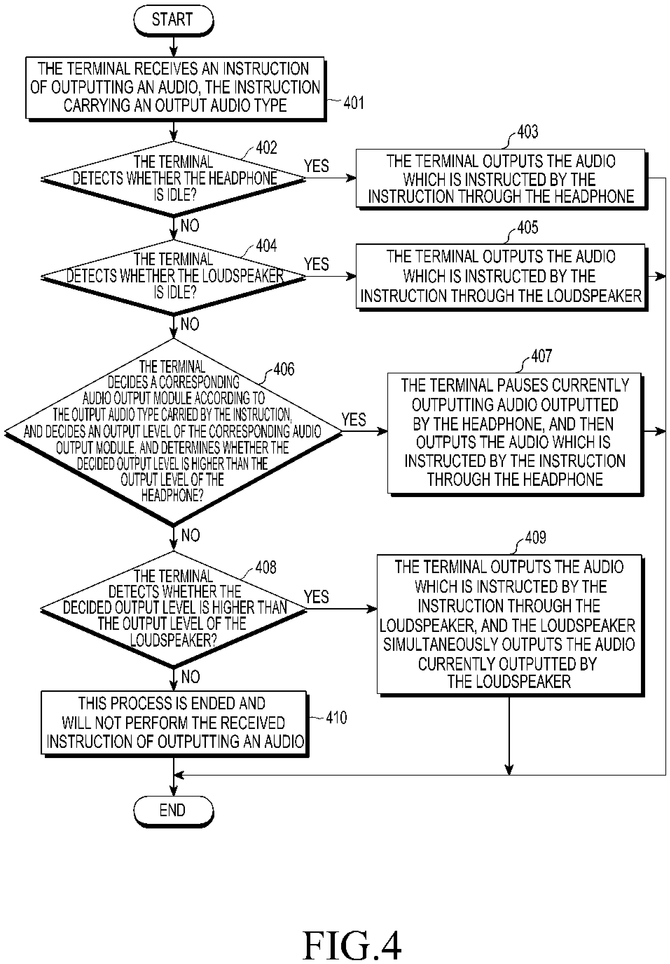

The detailed process of the first situation is shown in FIGURE 4. FIGURE 4 is a flowchart of a first embodiment of the multi-channel audio switching method for terminal provided by the present disclosure. The detailed process of the first embodiment includes:

Block 401: the portable terminal receives an instruction of outputting an audio, the instruction carrying an output audio type;

Block 402: the portable terminal detects whether the headphone is idle, if yes, block 403 is performed; if not, block 404 is performed;

Block 403: the portable terminal outputs the audio which is instructed by the instruction through the headphone;

Block 404: the portable terminal detects whether the loudspeaker is idle, if yes, block 405 is performed; if not, block 406 is performed;

Block 405: the portable terminal outputs the audio which is instructed by the instruction through the loudspeaker;

Block 406: the portable terminal decides a corresponding audio output module according to the output audio type carried by the instruction, and decides an output level of the corresponding audio output module, and determines whether the decided output level is higher than the output level of the headphone, if yes, block 407 is performed; if not, block 408 is performed;

Block 407: the portable terminal pauses currently outputting audio outputted by the headphone, and then outputs the audio which is instructed by the instruction through the headphone;

Block 408: the portable terminal detects whether the decided output level is higher than the output level of the loudspeaker, if yes, block 409 is performed; if not, this process is ended and will not perform the received instruction of outputting an audio;

Block 409: the portable terminal outputs the audio which is instructed by the instruction through the loudspeaker, and the loudspeaker simultaneously outputs the audio currently outputted by the loudspeaker.

Second situation, when the audio output modules are two headphones with one loudspeaker, the two headphones can be one ordinary headphone with one Bluetooth headset or two ordinary headphones, for example. When there is an audio needed to be outputted, the portable terminal decides one headphone corresponding to the output audio type according to the set correspondence and outputs the audio through the corresponding headphone. When there is another audio needed to be outputted, the other headphone can be selected to output the other audio. When the two headphones are currently outputting audios and there is one more audio needed to be outputted, the loudspeaker can be selected to output the one more audio.

When the three audio output modules are currently outputting audios, if there is one more audio needed to be outputted, then it is needed to determine an audio output module corresponding to the audio type and decide an output level of the corresponding audio output module. If the decided output level is higher than the output levels of the two headphones and the loudspeaker, the headphone having the highest output level is selected to output the one more audio, and the headphone having the highest output level pauses the audio which is currently being outputted. If the decided output level is higher than the output level of the headphone having lower output level but lower than the output level of the headphone having higher output level, the headphone having the lower output level is selected to output the one more audio, and the headphone having the lower output level pauses the audio which is currently being outputted. If the decided output level is lower than the output levels of the two headphones but higher than the output level of the loudspeaker, the loudspeaker is selected to output the one more audio, and the loudspeaker continues to output the audio which is currently being outputted, that is to output two audios at the same time. If the decided output level is lower than the output level of the loudspeaker, the portable terminal will not output the one more audio.

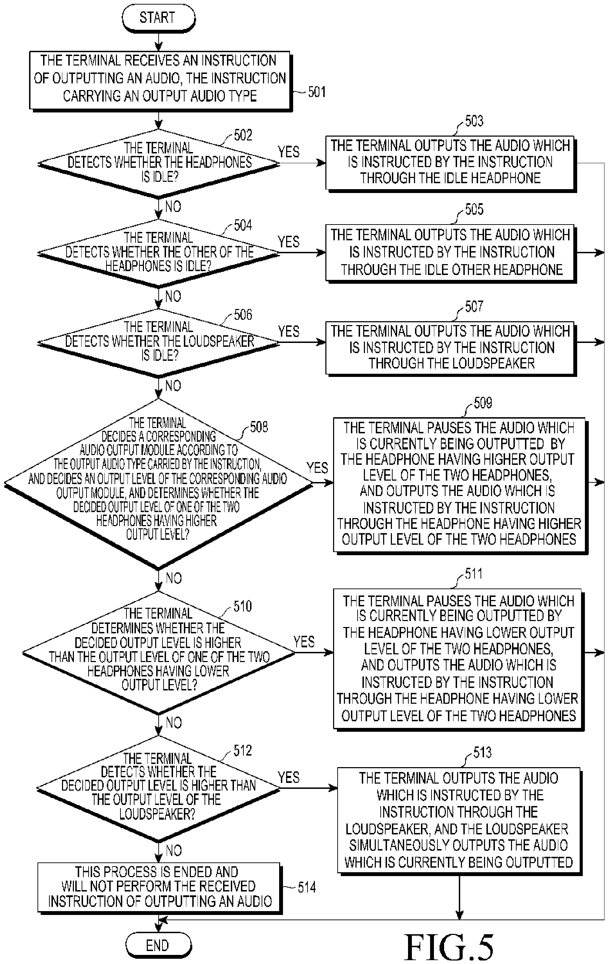

The detailed process of the second situation is shown in FIGURE 5. FIGURE 5 is a flowchart of a second embodiment of the multi-channel audio switching method for terminal provided by the present disclosure. The detailed process of the second embodiment includes:

Block 501: the portable terminal receives an instruction of outputting an audio, the instruction carrying an output audio type;

Block 502: the portable terminal detects whether one of the headphones is idle, if yes, block 503 is performed; if not, block 504 is performed;

Block 503: the portable terminal outputs the audio which is instructed by the instruction through the idle headphone;

Block 504: the portable terminal detects whether the other of the headphones is idle, if yes, block 505 is performed; if not, block 506 is performed;

Block 505: the portable terminal outputs the audio which is instructed by the instruction through the idle other headphone;

Block 506: the portable terminal detects whether the loudspeaker is idle, if yes, block 507 is performed; if not, block 508 is performed;

Block 507: the portable terminal outputs the audio which is instructed by the instruction through the loudspeaker;

Block 508: the portable terminal decides a corresponding audio output module according to the output audio type carried by the instruction, and decides an output level of the corresponding audio output module, and determines whether the decided output level is higher than the output level of one of the two headphones having higher output lever, if yes, block 509 is performed; if not, block 510 is performed;

Block 509: the portable terminal pauses the audio which is currently being outputted by the headphone having higher output level of the two headphones, and outputs the audio which is instructed by the instruction through the headphone having higher output level of the two headphones;

Block 510: the portable terminal determines whether the decided output level is higher than the output level of one of the two headphones having lower output lever, if yes, block 511 is performed; if not, block 512 is performed;

Block 511: the portable terminal pauses the audio which is currently being outputted by the headphone having lower output level of the two headphones, and outputs the audio which is instructed by the instruction through the headphone having lower output level of the two headphones;

Block 512: the portable terminal determines whether the decided output level is higher than the output level of the loudspeaker, if yes, block 513 is performed; if not, this process is ended and will not perform the received instruction of outputting an audio;

Block 513: the portable terminal outputs the audio which is instructed by the instruction through the loudspeaker, and the loudspeaker simultaneously outputs the audio which is currently being outputted.

Third situation, when the audio output modules are three headphones with one loudspeaker, the three headphones can be two ordinary headphones with one Bluetooth headset, for example. When there is an audio needed to be outputted, the portable terminal selects one headphone corresponding to the output audio type according to the set correspondence and outputs the audio through the corresponding headphone. When there is another audio needed to be outputted, another headphone can be selected to output the another audio. When there is still another audio needed to be outputted, the last headphone can be selected to output the still another audio. When the three headphones are currently outputting audios and there is one more audio needed to be outputted, the loudspeaker can be selected to output the one more audio.

When the three headphones and the loudspeaker are currently outputting audios, if there is one more audio needed to be outputted again, then it is need to determine an audio output module corresponding to the audio type and decide an output level of the corresponding audio output module. If the decided output level is higher than the output levels of the three headphones and the loudspeaker, the headphone having the highest output level of the three headphones is selected to output the one more audio, and the headphone having the highest output level pauses the audio which is currently being outputted. If the decided output level is lower than the output level of the headphone having the highest output level but higher than the output level of the headphone having the second highest output level, the headphone having the second highest output level is selected to output the one more audio, and the headphone having the second highest output level pauses the audio which is currently being outputted. If the decided output level is lower than the output level of the headphone having the second highest output level but higher than the output level of the headphone having the lowest output level, the headphone having the lowest output level is selected to output the one more audio, and the headphone having the lowest output level pauses the audio which is currently being outputted. If the decided output level is lower than the output levels of the three headphones but higher than the output level of the loudspeaker, the loudspeaker is selected to output the one more audio, and the loudspeaker continues to output the audio which is currently being outputted, that is to output two audios at the same time. If the decided output level is lower than the output level of the loudspeaker, the portable terminal will not output the one more audio.

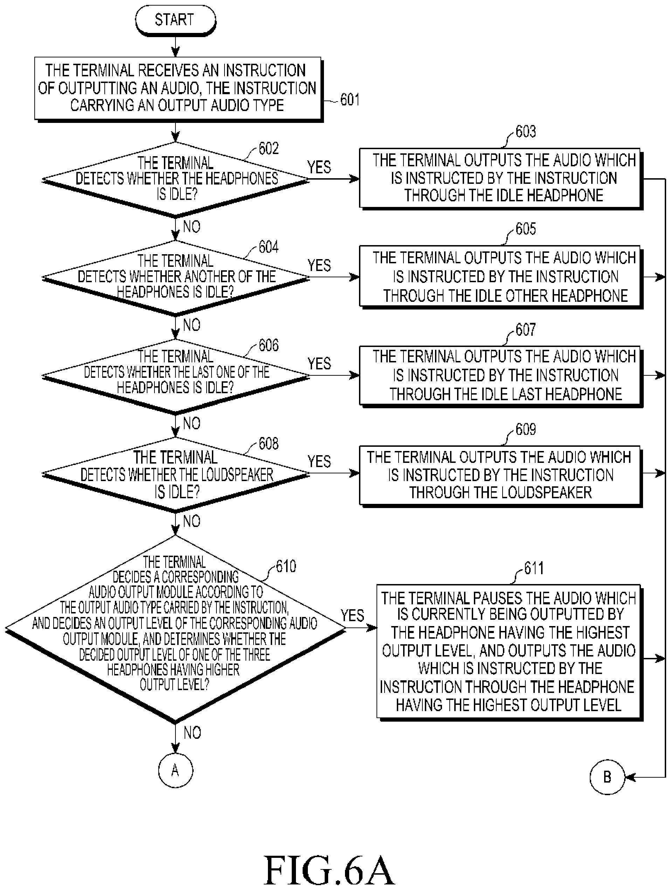

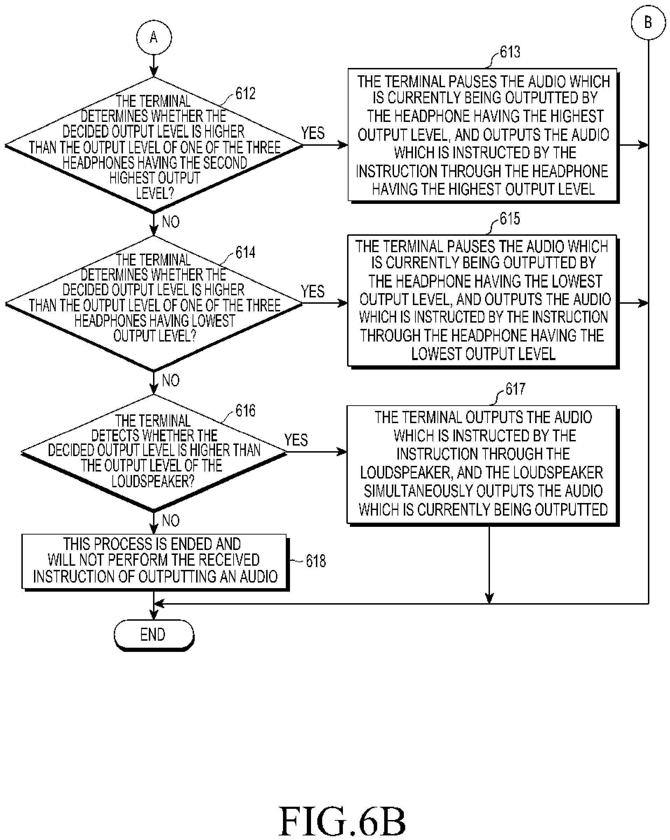

The detailed process of the third situation is shown in FIGURES 6a and 6b. FIGURES 6a and 6b are a flowchart of a third embodiment of the multi-channel audio switching method for terminal provided by the present disclosure. The detailed process of the third embodiment includes:

Block 601: the portable terminal receives an instruction of outputting an audio, the instruction carrying an output audio type;

Block 602: the portable terminal detects whether one of the headphones is idle, if yes, block 603 is performed; if not, block 604 is performed;

Block 603: the portable terminal outputs the audio which is instructed by the instruction through the idle headphone;

Block 604: the portable terminal detects whether another one of the headphones is idle, if yes, block 605 is performed; if not, block 606 is performed;

Block 605: the portable terminal outputs the audio which is instructed by the instruction through the idle another headphone;

Block 606: the portable terminal detects whether the last one of the headphones is idle, if yes, block 607 is performed; if not, block 608 is performed;

Block 607: the portable terminal outputs the audio which is instructed by the instruction through the idle last headphone;

Block 608: the portable terminal detects whether the loudspeaker is idle, if yes, block 609 is performed; if not, block 610 is performed;

Block 609: the portable terminal outputs the audio which is instructed by the instruction through the loudspeaker;

Block 610: the portable terminal decides a corresponding audio output module according to the output audio type carried by the instruction, and decides an output level of the corresponding audio output module, and determines whether the decided output level is higher than the output level of one of the three headphones having the highest output lever, if yes, block 611 is performed; if not, block 612 is performed;

Block 611: the portable terminal pauses the audio which is currently being outputted by the headphone having the highest output level, and outputs the audio which is instructed by the instruction through the headphone having the highest output level;

Block 612: the portable terminal determines whether the decided output level is higher than the output level of one of the three headphones having the second highest output lever, if yes, block 613 is performed; if not, block 614 is performed;

Block 613: the portable terminal pauses the audio which is currently being outputted by the headphone having the second highest output level, and outputs the audio which is instructed by the instruction through the headphone having the second highest output level;

Block 614: the portable terminal determines whether the decided output level is higher than the output level of one of the three headphones having lowest output lever, if yes, block 615 is performed; if not, block 616 is performed;

Block 615: the portable terminal pauses the audio which is currently being outputted by the headphone having the lowest output level, and outputs the audio which is instructed by the instruction through the headphone having the lowest output level;

Block 616: the portable terminal determines whether the decided output level is higher than the output level of the loudspeaker, if yes, block 617 is performed; if not, this process is ended and will not perform the received instruction of outputting an audio;

Block 617: the portable terminal outputs the audio which is instructed by the instruction through the loudspeaker, and the loudspeaker simultaneously outputs the audio which is currently being outputted.

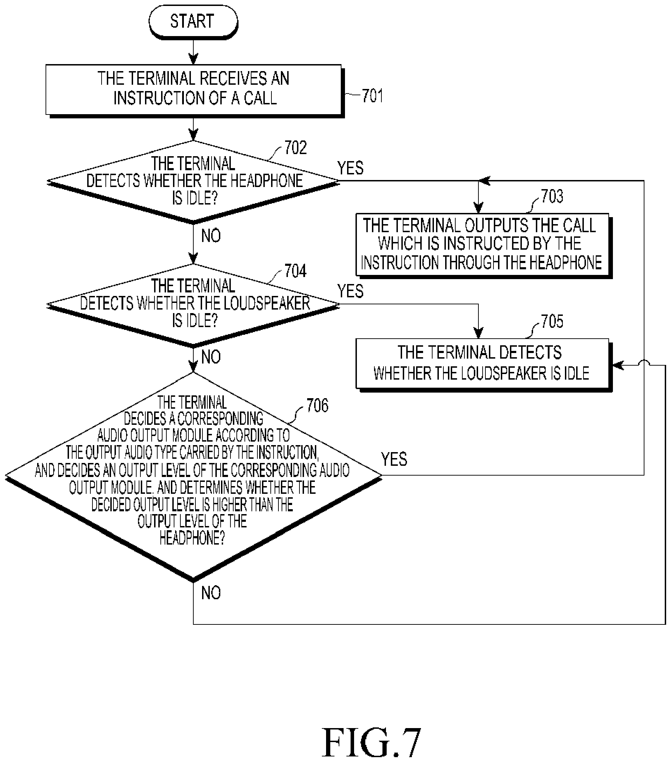

When the output audio is a call and the audio output modules of the portable terminal are one headphone with one loudspeaker, the detailed switching process is shown in FIGURE 7. FIGURE 7 is a flowchart of a forth embodiment of the multi-channel audio switching method for terminal provided by the present disclosure. The detailed process of the forth embodiment includes:

Block 701: the portable terminal receives an instruction of a call;

Block 702: the portable terminal detects whether the headphone is idle, if yes, block 703 is performed; if not, block 704 is performed;

Block 703: the portable terminal outputs the call which is instructed by the instruction through the headphone;

Block 704: the portable terminal detects whether the loudspeaker is idle, if yes, block 705 is performed; if not, block 706 is performed;

Block 705: the portable terminal outputs the call which is instructed by the instruction through the loudspeaker;

Block 706: the portable terminal decides a corresponding audio output module according to the output audio type (the type is an incoming call) carried by the instruction, and decides an output level of the corresponding audio output module, and determines whether the decided output level is higher than the output level of the headphone, if yes, block 703 is performed; if not, block 705 is performed;

In this block, the portable terminal can further determine whether the headphone satisfies the call conditions, that is to determine whether the headphone can be used to communicate, if yes, block 703 is performed; if not, block 705 is performed.

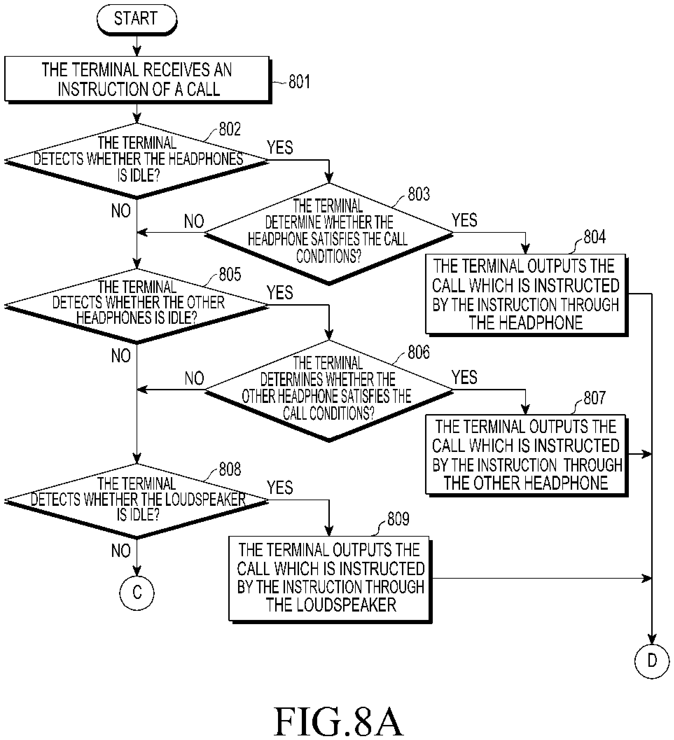

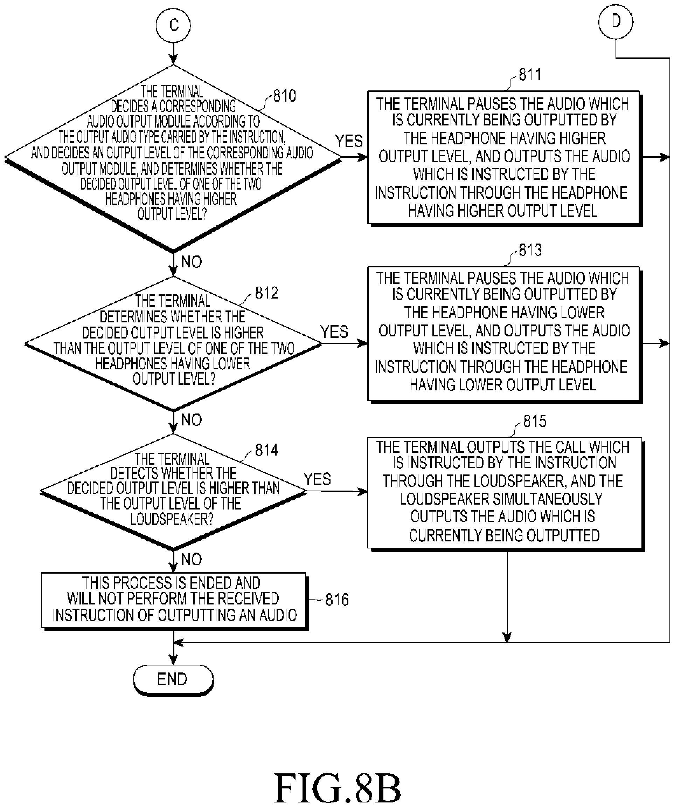

When the output audio is a call and the audio output modules of the portable terminal are two headphones with one loudspeaker, the detailed switching process is shown in FIGURES 8a and 8b. FIGURES 8a and 8b are a flowchart of a fifth embodiment of the multi-channel audio switching method for terminal provided by the present disclosure. The detailed process of the fifth embodiment includes:

Block 801: the portable terminal receives an instruction of a call;

Block 802: the portable terminal detects whether one of the headphones is idle, if yes, block 803 is performed; if not, block 805 is performed;

Block 803: the portable terminal determine whether the headphone satisfies the call conditions, if yes, block 804 is performed; if not, block 805 is performed;

Block 804: the portable terminal outputs the call which is instructed by the instruction through the headphone;

Block 805: the portable terminal detects whether the other headphone is idle, if yes, block 806 is performed; if not, block 708 is performed;

Block 806: the portable terminal determines whether the other headphone satisfies the call conditions, if yes, block 807 is performed; if not, block 808 is performed;

Block 807: the portable terminal outputs the call which is instructed by the instruction through the other headphone;

Block 808: the portable terminal determines whether the loudspeaker is idle, if yes, block 809 is performed; if not, block 810 is performed;

Block 809: the portable terminal outputs the call which is instructed by the instruction through the loudspeaker;

Block 810: the portable terminal decides a corresponding audio output module according to the call type carried by the instruction, and decides an output level of the corresponding audio output module, and determines whether the decided output level is higher than the output level of one of the two headphones having higher output lever, if yes, block 811 is performed; if not, block 812 is performed;

Block 811: the portable terminal pauses the audio which is currently being outputted by the headphone having higher output level, and outputs the audio which is instructed by the instruction through the headphone having higher output level;

Before performing block 811, the portable terminal decides the headphone having higher output level can output the call, that is, satisfy the call conditions;

Block 812: the portable terminal determines whether the decided output level is higher than the output level of one of the two headphones having lower output lever, if yes, block 813 is performed; if not, block 814 is performed;

Block 813: the portable terminal pauses the audio which is currently being outputted by the headphone having lower output level, and outputs the audio which is instructed by the instruction through the headphone having lower output level;

Before performing block 813, the portable terminal decides the headphone having lower output level can output the call, that is, satisfy the call conditions;

Block 814: the portable terminal determines whether the decided output level is higher than the output level of the loudspeaker, if yes, block 815 is performed; if not, this process is ended and will not perform the received instruction of outputting an audio;

Block 815: the portable terminal outputs the call which is instructed by the instruction through the loudspeaker, and the loudspeaker simultaneously outputs the audio which is currently being outputted.

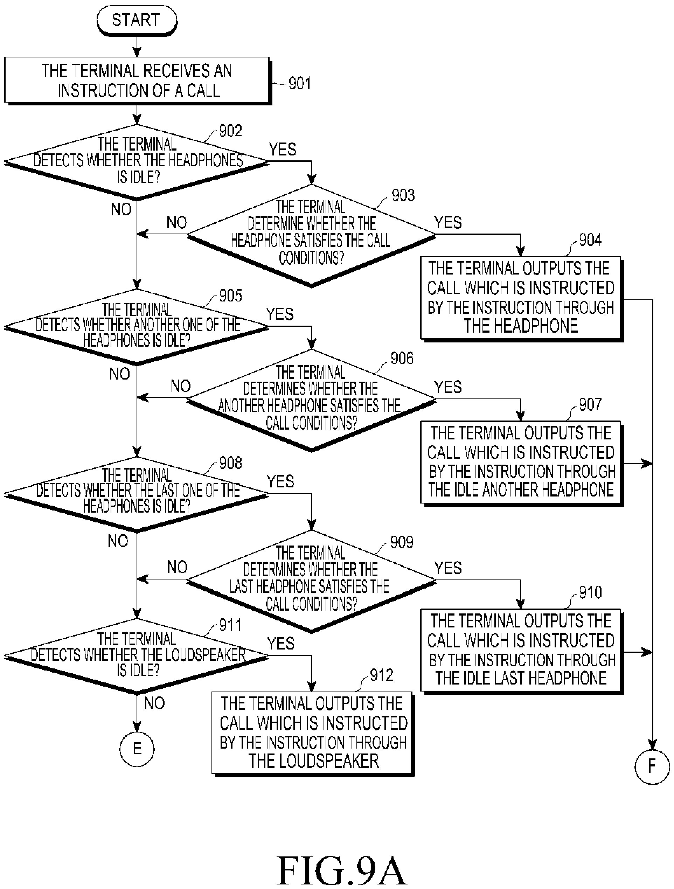

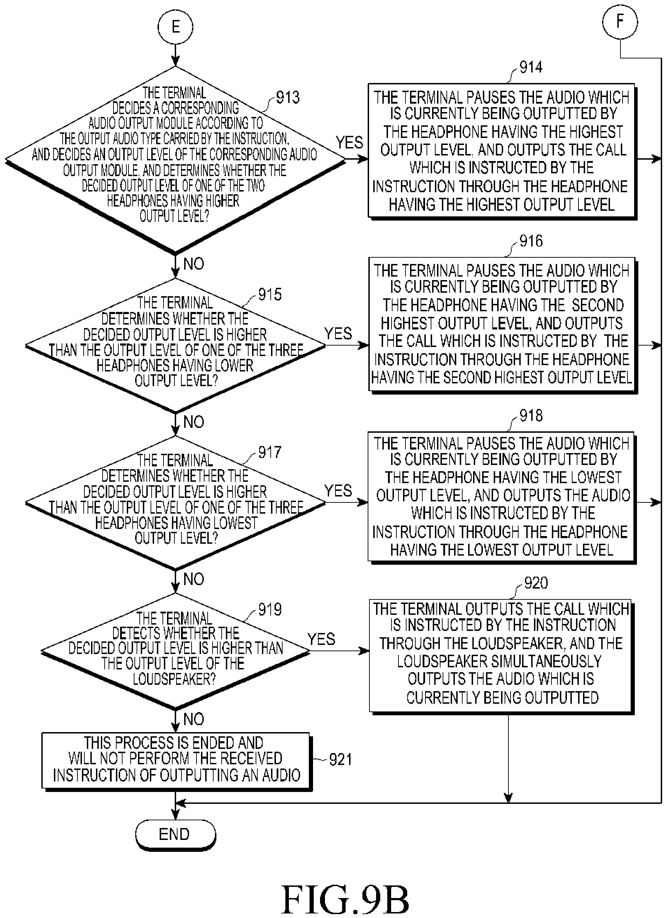

When the output audio is a call and the audio output modules of the portable terminal are three headphones with one loudspeaker, the detailed switching process is shown in FIGURES 9a and 9b. FIGURES 9a and 9b are a flowchart of a sixth embodiment of the multi-channel audio switching method for terminal provided by the present disclosure. The detailed process of the sixth embodiment includes:

Block 901: the portable terminal receives an instruction of a call;

Block 902: the portable terminal detects whether one of the headphones is idle, if yes, block 903 is performed; if not, block 905 is performed;

Block 903: the portable terminal determines whether the headphone satisfies the call conditions, if yes, block 904 is performed; if not, block 905 is performed;

Block 904: the portable terminal outputs the call which is instructed by the instruction through the headphone;

Block 905: the portable terminal detects whether another one of the headphones is idle, if yes, block 906 is performed; if not, block 908 is performed;

Block 906: the portable terminal determines whether the another headphone satisfies the call conditions, if yes, block 907 is performed; if not, block 908 is performed;

Block 907: the portable terminal outputs the call which is instructed by the instruction through the idle another headphone;

Block 908: the portable terminal detects whether the last one of the headphones is idle, if yes, block 909 is performed; if not, block 911 is performed;

Block 909: the portable terminal determines whether the last headphone satisfies the call conditions, if yes, block 910 is performed; if not, block 911 is performed;

Block 910: the portable terminal outputs the call which is instructed by the instruction through the idle last headphone;

Block 911: the portable terminal detects whether the loudspeaker is idle, if yes, block 912 is performed; if not, block 913 is performed;

Block 912: the portable terminal outputs the call which is instructed by the instruction through the loudspeaker;

Block 913: the portable terminal decides a corresponding audio output module according to the output audio type carried by the instruction, and decides an output level of the corresponding audio output module, and determines whether the decided output level is higher than the output level of one of the three headphones having the highest output lever, if yes, block 914 is performed; if not, block 915 is performed;

Block 914: the portable terminal pauses the audio which is currently being outputted by the headphone having the highest output level, and outputs the call which is instructed by the instruction through the headphone having the highest output level;

Before performing block 914, the portable terminal decides the headphone having the highest output level can output the call, that is, satisfy the call conditions;

Block 915: the portable terminal determines whether the decided output level is higher than the output level of one of the three headphones having the second highest output lever, if yes, block 916 is performed; if not, block 917 is performed;

Block 916: the portable terminal pauses the audio which is currently being outputted by the headphone having the second highest output level, and outputs the call which is instructed by the instruction through the headphone having the second highest output level;

Before performing block 916, the portable terminal decides the headphone having the second highest output level can output the call, that is, satisfy the call conditions;

Block 917: the portable terminal determines whether the decided output level is higher than the output level of one of the three headphones having lowest output lever, if yes, block 918 is performed; if not, block 919 is performed;

Block 918: the portable terminal pauses the audio which is currently being outputted by the headphone having the lowest output level, and outputs the call which is instructed by instruction through the headphone having the lowest output level;

Before performing block 918, the portable terminal decides the headphone having the lowest output level can output the call, that is, satisfy the call conditions;

Block 919: the portable terminal determines whether the decided output level is higher than the output level of the loudspeaker, if yes, block 920 is performed; if not, this process is ended and will not perform the received instruction of output an audio;

Block 920: the portable terminal outputs the call which is instructed by the instruction through the loudspeaker, and the loudspeaker simultaneously outputs the audio which is currently being outputted.

The present disclosure is explained with a concrete embodiment in the following.

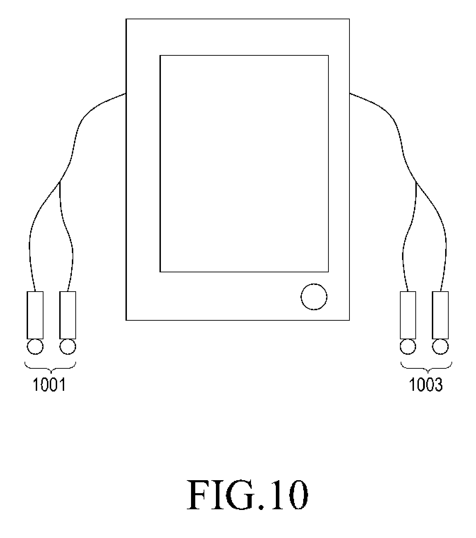

As shown in FIGURE 10, one terminal produced by the USA's company Google® is taken as an example to explain the disclosure. The operating system platform of the portable terminal supports multi-tasking, and can provide technical supports for different audio outputting. First, the portable terminal provides a switching audio output interface, and the interface can be operated to open or close the switching output audio function. When the user operates the switching audio output interface, the portable terminal receives an instruction of opening the switching output audio function to control opening and show that the output audio function has been opened in the status bar of the portable terminal; when the user operates the switching audio output interface again, the portable terminal receives an instruction of closing the switching output audio function to control closing and show that the output audio function has been closed in the status bar of the portable terminal. When the output audio function has been opened, the portable terminal will create an audio output interface in the screen, showing audio output modules which can be currently detected by the portable terminal and working station of the current audio output module. For example, in the interface, there are three buttons representing headphone 1, headphone 2 and amplifier, respectively. If the portable terminal detects a Bluetooth headset, a Bluetooth headset button can also be shown. In the screen of the portable terminal, there is a switching output audio keystroke. When the user clicks on the switching output audio keystroke, the portable terminal will receive an instruction of switching output audio to proceed the output audio switching process. Of course, the user can also click the buttons in the interface to send an instruction of switching output audio to the portable terminal. For example, clicking one time, the portable terminal enters into the preparing state from the starting state; clicking the button again, the portable terminal enters into the switching output audio state, and the portable terminal proceeds switching audio output process; if not the same button is clicked, the portable terminal will return to the starting state. After outputting audio is completed, the portable terminal can also send a notification indicating the user.

The objects, technical solutions and advantages of the disclosure are further explained in details with reference to above preferred embodiments. It can be understood, the foregoing are only preferred embodiments of the present disclosure and are not for use in limiting the protection scope thereof. All modifications, equivalent replacements or improvements in accordance with the spirit and principles of the present disclosure shall be included in the protection scope of the present disclosure.

Although the present disclosure has been described with an exemplary embodiment, various changes and modifications may be suggested to one skilled in the art. It is intended that the present disclosure encompass such changes and modifications as fall within the scope of the appended claims.

## Claims

1. A multi-channel audio switching method for a portable terminal, the method comprising: setting correspondence between output audio types and audio output modules (307) and setting output levels for the different audio output modules; the method further comprising:
receiving (201) an instruction of outputting an audio, the instruction carrying an output audio type;
determining (202) an audio output module corresponding to the output audio type and an output level of the corresponding audio output module according to the correspondence;
determining (203) according to the determined output level in order audio output modules of which each has an output level not higher than the determined output level, and determining whether there are idle audio output modules among the found out audio output modules; if yes, outputting (204) the audio through the currently highest level idle audio output module among the found out audio output modules; if not, determining and instructing (205) one audio output module to output the audio according to the determined output level.

2. The method of claim 1, wherein the audio output modules are any combination of earphones, Bluetooth headsets and loudspeakers of the portable terminal.

3. The method of claim 1, wherein when the audio output module is instructed to output the audio, the method further comprises:
if the audio output module is an earphone, pausing outputting other audio which is currently being outputted; if the audio output module is a loudspeaker, not pausing outputting other audio which is currently being outputted.

4. The method of claim 1, wherein the setting correspondence between output audio types and audio output modules are set in the portable terminal in the form of a list.

5. A multi-channel audio switching device for a portable terminal, the device comprising: a logic operation module (305), an instruction control module (301), a memory module (303) and a plurality of audio output modules (307), wherein
the logic operation module configured to identify user's operation and generate an instruction of outputting an audio, the instruction carrying an output audio type sent to the instruction control module;
the instruction control module configured to receive the instruction of outputting an audio sent by the logic operation module, and to determine an audio output module corresponding to the output audio type carried by the instruction and an output level of the corresponding audio output module according to a correspondence obtained from the memory module, and to find out according to the determined output level in order audio output modules of which each has an output level not higher than the determined output level, and to find out the currently highest level idle audio output module among the found out audio output modules and then to instruct the idle audio output module to output the audio; if no idle audio output module is found according to the determined output level, to determine and instruct one audio output module corresponding to the determined output level to output the audio according to output levels of different audio output modules obtained from the memory module;
the memory module configured to store the correspondence between output audio types and the audio output modules and to store the output levels of the different audio output modules;
one of the plurality of audio output modules configured to output the audio according to the instruction of the instruction control module.

6. The device of claim 5, wherein the audio output modules are any combination of earphones, Bluetooth headsets and loudspeakers of the portable terminal.

7. The device of claim 5, wherein if the audio output module is an earphone, the instruction control module pauses outputting of other audio which is currently being outputted, if the audio output module is a loudspeaker, the instruction control module does not pauses outputting of other audio which is currently being outputted.

8. The device of claim 5, wherein the setting correspondence between output audio types and audio output modules are set in the portable terminal in the form of a list.
